# FASCICULE DE BREVET EUROPEEN

(11) **EP 1 731 987 B1**
(45) Date de publication et mention de la délivrance du brevet: **23.03.2011**
(21) Numéro de dépôt: 06290899.1
(22) Date de dépôt: 01.06.2006
(51) Int. Cl.: A45F 3/14, G06F 1/16

(54) **Dispositif pour l'information visuelle individuelle d'un utilisateur**
Vorrichtung zur individuellen visuellen Information eines Benutzers
Device for a user's individual visual information

(30) Priorité: 08.06.2005 FR 0505821
(43) Date de publication de la demande: 13.12.2006
(73) Titulaire: Sagem Défense Sécurité, 75015 Paris (FR)
(72) Inventeur: Penhaleux, Philippe, c/o Sagem Defense Securite, 75015 Paris (FR); Lardillier, Fabienne, c/o Sagem Defense Securite, 75015 Paris (FR); Hermellin, Bernard, c/o Sagem Defense Securite, 75015 Paris (FR); Letellier, Guillaume, c/o Sagem Defense Securite, 75015 Paris (FR); Berthaud, Hugues, c/o Sagem Defense Securite, 75015 Paris (FR)
(74) Mandataire: Gorrée, Jean-Michel

(56) Documents cités:
- US-A- 5 416 310
- US-A- 5 938 096
- US-A1- 2002 074 370
- US-A1- 2003 020 629

## Description

La présente invention concerne des perfectionnements apportés dans le domaine de la présentation d'une information visuelle individuelle à un utilisateur devant pouvoir conserver la liberté d'emploi de ses deux mains, et l'invention concerne plus spécifiquement un dispositif pour l'information visuelle individuelle d'un utilisateur, ledit dispositif comprenant un terminal portatif d'information visuelle et des moyens de support associés audit terminal le rendant propre à être supporté par au moins élément d'habillement de l'utilisateur.

On connaît déjà divers agencements vestimentaires appropriés pour supporter du matériel et notamment des appareils électroniques, par exemple informatiques.

Toutefois, de nombreux agencements font appel à des ceintures destinées à être portées autour de la taille de l'utilisateur ou des agencements vestimentaires analogues (par exemple les documents US 5 226 195, US 5 285 398, US 5 337 935, US 5 351 340, US 5 363 863, US 5 410 762, US 5 450 396, US 5 548 843, US 6 137 675, US 2002/074370 A1) ou des agencements destinés à être portés sur les épaules de l'utilisateur (par exemple US 5 285 398, US 5 421 499). L'inconvénient de ces agencements connus du type ceinture réside dans leur déformation verticale sous l'action du poids du matériel qu'ils supportent, surtout lorsque ce matériel est supporté en débord sur cette ceinture. En outre, s'agissant d'un matériel de présentation visuelle d'information, son support sur une ceinture, même avec interposition d'un bras tel qu'un bras flexible, le positionne trop bas pour que l'utilisateur puisse l'observer sans avoir à baisser la tête, ce qui peut ne pas être acceptable dans certaines situations où l'utilisateur doit maintenir son visage orienté dans une direction d'observation donnée.

On connaît aussi des agencements élaborés avec des gilets ou des vestes (par exemple US 5 416 310, US 5 555 490). Ainsi, le document US 5 416 310 décrit un dispositif pour l'information visuelle individuelle d'un utilisateur, ce dispositif comprenant un terminal portatif d'information visuelle et des moyens de support associés à ce terminal le rendant propre à être supporté par un élément d'habillement de l'utilisateur ; il est prévu une patte solidarisable à un élément d'habillement au niveau du buste de l'utilisateur ; lorsqu'il n'est pas utilisé, le terminal peut être retenu en position relevée contre le buste de l'utilisateur par un pivot. Toutefois, ces agencements connus ne sont pas en mesure de répondre à tous les impératifs requis par certains utilisateurs, notamment pour ce qui concerne la simplicité de réalisation et l'aptitude de l'utilisateur à pouvoir observer le terminal d'information visuelle sans avoir à incliner la tête.

Le document US 5 938 096 décrit un dispositif pour l'information visuelle individuelle d'un utilisateur, ce dispositif comprenant un terminal portatif qui est attaché par un lien sur la nuque de l'utilisateur.

De plus, les dispositifs connus, quel qu'en soit le type, offrent peu de facilité d'adaptation du positionnement du terminal par rapport aux yeux de l'utilisateur.

Le document JP 2003-013317 divulgue un agencement de montage d'un appareil électronique du type téléphone mobile sur la partie de poitrine d'une veste ; la base de l'appareil est solidarisée à la veste par une bande de tissu autorisant le pivotement de l'appareil entre une position relevée plaquée à la veste et une position abattue inclinée.

C'est dans ce contexte que l'invention a pour but de proposer une solution mieux appropriée aux diverses exigences de la pratique, notamment pour ce qui concerne la simplicité de réalisation, la simplicité d'utilisation, la faculté de réglage du terminal par rapport aux yeux de l'utilisateur, et surtout la possibilité pour l'utilisateur de pouvoir regarder le terminal sans avoir à baisser la tête.

A ces fins, l'invention propose un dispositif pour l'information visuelle individuelle d'un utilisateur selon le préambule de la revendication 1, ce dispositif, étant agencé conformément à l'invention, se caractérisant par les dispositions énoncées dans la partie caractérisante de la revendication 1.

Les moyens proposés par l'invention se révèlent remarquablement simples : la fixation du terminal sur un ou des éléments d'habillement recouvrant le buste de l'utilisateur permet d'écarter les inconvénients précités inhérents aux ceintures ; de plus, il suffit que le terminal comporte ou soit équipé inférieurement d'un bras et, pour le reste, il s'agit de matériels couramment disponibles et d'un coût minime qui sont associables à l'habillement de l'utilisateur sans modification substantielle de celui-ci. Or, les avantages procurés par l'ensemble conforme à l'invention répondent parfaitement aux requêtes des utilisateurs non seulement pour ce qui concerne les implications de faible coût et de simplicité de mise en oeuvre, mais surtout pour ce qui concerne les facilités d'exploitation par l'utilisateur: le passage de la position effacée ou relevée à la position d'utilisation ou inversement se fait très rapidement et très simplement, d'une seule main si nécessaire.

Dans un mode de réalisation préféré, on prévoit que le terminal d'information visuelle soit solidaire d'une housse, que le lien souple soit solidarisé à cette housse dans la partie supérieure de celle-ci, et que la seconde patte soit solidarisable à cette housse à la partie supérieure de celle-ci.

Pour retenir le terminal de façon sûre sous l'oeil de l'utilisateur, le lien souple comprend deux brins solidarisés au terminal d'information visuelle de chaque côté de celui-ci. Avantageusement, le lien souple est muni de moyens de réglage en longueur ; dans ce cas, il est intéressant que les moyens de réglage en longueur du lien souple soient disposés du côté de sa susdite seconde extrémité. Dans un exemple de réalisation simple et économique, on peut prévoir que le lien souple soit un lacet. Toujours dans le contexte d'une réalisation simple, robuste et pratique, les moyens de réglage en longueur peuvent comprendre une pince de blocage déplaçable le long du lacet.

Pour qu'en position d'utilisation le terminal d'information visuelle soit positionné correctement par rapport aux yeux de l'utilisateur de manière que celui-ci n'ait pas à incliner la tête pour regarder le terminal, on peut prévoir que le terminal d'information visuelle comprenne un boîtier duquel le bras transversal est écarté par des moyens rigides d'entretoisement.

Dans un mode de réalisation préféré, il est avantageux que le dispositif comporte une embase souple munie de moyens d'attache rapide propres à autoriser sa fixation sur au moins un élément d'habillement de l'utilisateur, que les première et seconde pattes soient solidarisées à cette embase, et que la susdite seconde extrémité du lien souple soit solidaire de cette embase. Dans un exemple concret de réalisation, on prévoit que l'embase est solidaire de la housse et constitue un rabat de celle-ci propre à former un couvercle souple.

En pratique, il est avantageux que les moyens d'attache rapide soient des rubans à micro-crochets ou rubans auto-agrippants (tels que ceux commercialisés sous la marque « Velcro ») dont le maniement est particulièrement simple et rapide, même d'une seule main.

En pratique toujours, on prévoit que l'élément d'habillement porté par l'utilisateur recouvre son buste, s'agissant notamment d'un gilet ou d'une veste qui épouse le buste de l'utilisateur de façon sensiblement étroite de sorte que toute possibilité de déplacement vertical du terminal se trouve écartée.

L'invention sera mieux comprise à la lecture de la description détaillée qui suit de certains modes de réalisation préférés donnés uniquement à titre d'exemples nullement limitatifs. Dans cette description, on se réfère aux dessins annexés sur lesquels :
- les figures 1A et 1B sont des représentations très schématiques, en perspective, d'un dispositif agencé conformément à l'invention, montré respectivement dans deux positions fonctionnelles différentes;
- la figure 2 est une vue en perspective illustrant un mode de réalisation préféré d'un dispositif agencé conformément à l'invention et montré dans la même position fonctionnelle qu'à la figure 1A ;
- la figure 3 est une vue de face illustrant un mode préféré de mise en oeuvre du dispositif de la figure 2 montré dans la même position fonctionnelle qu'à la figure 1B ; et
- les figures 4A et 4B sont des vues de face de respectivement deux modes de réalisation possibles d'un terminal portatif d'un dispositif conforme à l'invention.

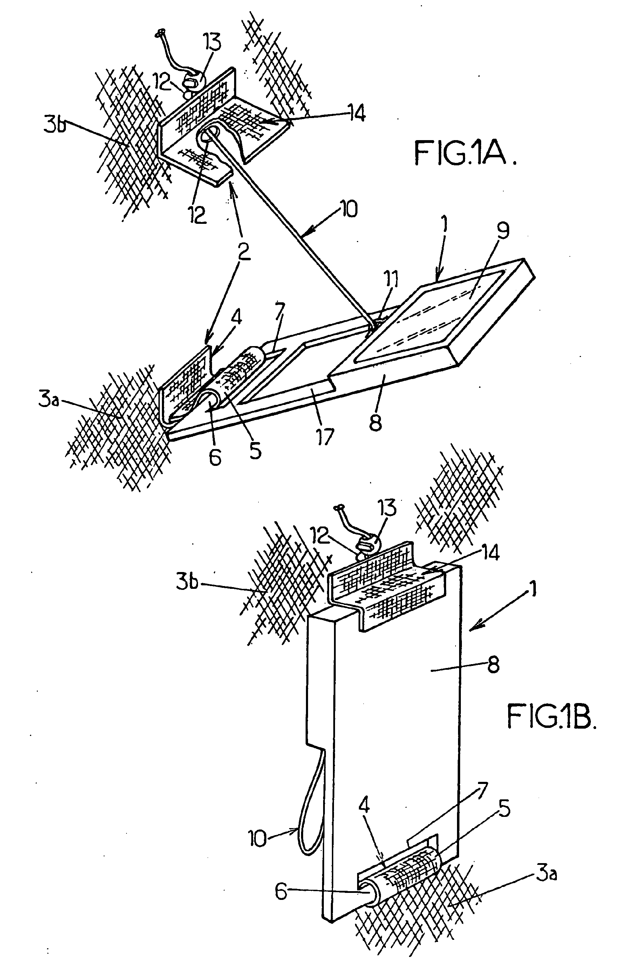

En se reportant maintenant aux figures 1A et 1B, et tout d'abord plus particulièrement à la figure 1A, un dispositif pour l'information visuelle individuelle d'un utilisateur comprenant un terminal portatif 1 d'information visuelle et des moyens de support 2 associés audit terminal 1 le rendant propre à être supporté par au moins un élément d'habillement 3 de l'utilisateur.

Les moyens de support 2 appartenant au dispositif comprennent au moins une première patte 4 qui est refermable sur elle-même, pour former une boucle 5 comme visible à la figure 1A, et maintenue fermée à l'aide d'un moyen d'attache rapide tel de préférence un ruban à micro-crochets ou rubans auto-agrippants comme ceux disponibles dans le commerce sous la marque « Velcro ». La patte 4 est propre à être solidaire d'un élément d'habillement (schématisé en 3a à la figure 1A) de l'utilisateur sensiblement au niveau du buste, et plus précisément de l'estomac, de l'utilisateur ; à cet effet, la patte 4 peut être pourvue, sur sa face de montage sur l'élément d'habillement, de micro-crochets pour sa fixation rapide sur l'élément d'habillement, ou être cousue à demeure sur celui-ci.

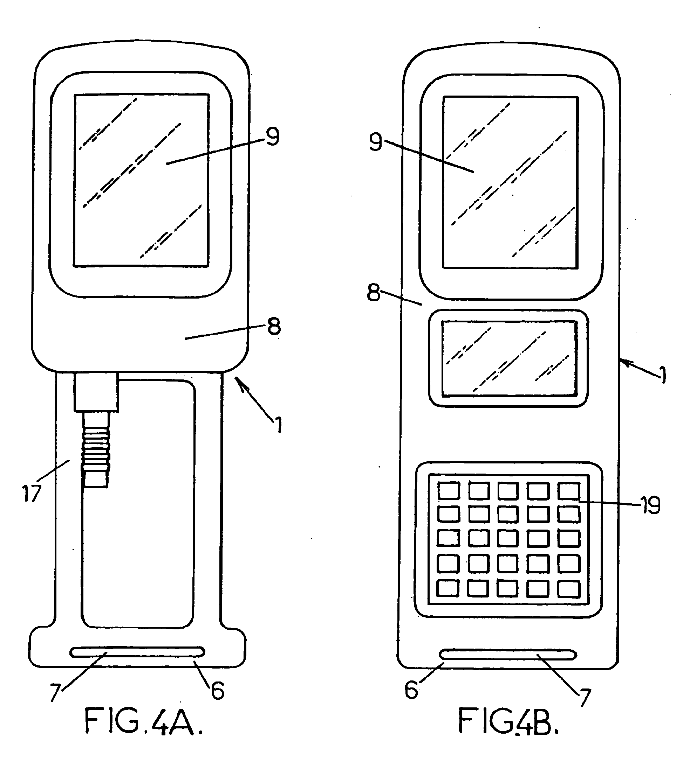

De son côté, le terminal d'information visuelle 1 comprend un boîtier rigide 8 qui supporte supérieurement un écran 9 et qui est muni inférieurement d'un bras 6 transversal. Ce bras 6 peut, par exemple, être défini par une lumière allongée 7 pratiquée au voisinage du bord inférieur du terminal 1, comme cela apparaît mieux sur les exemples des figures 4A et 4B. Ainsi configuré, le bras 6 est propre à être entouré par la première patte 4 comme visible à la figure 1A. Grâce à cette disposition, le bras 6 forme un pivot d'articulation en rotation retenu dans la première patte 4 refermée sur elle-même en une boucle 5 en formant une douille d'articulation du pivot ; le terminal 1 est de ce fait supporté sur l'élément d'habillement 3a avec possibilité de rotation à son bord inférieur.

Les moyens de support 2 du dispositif comprennent en outre au moins un lien 10 souple, par exemple de façon simple, robuste et économique, sous forme d'un lacet. Une première extrémité du lien 10 est solidarisée en 11 au terminal d'information visuelle dans la partie supérieure ou au voisinage de la partie supérieure de celui-ci et sa seconde extrémité est propre à être fixée en un emplacement, situé au-dessus de la susdite première patte 4, d'un élément d'habillement 3b respectif de l'utilisateur. Dans l'exemple illustré à la figure 1A, l'élément d'habillement 3b est pourvu de deux oeillets 12 traversés par la seconde extrémité du lien 10, qui est retenu grâce à un organe de retenue plus gros que l'oeillet, par exemple un noeud ou, comme illustré, une olive 13 solidaire du lien et dont l'utilité sera exposée plus loin.

Au surplus, on fait en sorte, dans l'agencement qui vient d'être exposé, que la première patte 4 soit positionnée sur l'élément d'habillement 3a respectif en un emplacement tel et que le lien 10 souple possède une longueur telle que le terminal d'information visuelle 1 puisse être retenu en position inclinée, comme montré à la figure 1A sous le regard et à distance de vision de l'utilisateur, de telle sorte que l'utilisateur puisse observer le terminal 1, ou tout au moins la partie utile (l'écran 9) de celui-ci sans avoir à baisser la tête de façon substantielle et de préférence simplement en abaissant ses yeux sans mouvement de sa tête (position fonctionnelle ou d'utilisation du terminal 1 montrée à la figure 1A).

Enfin, les moyens de support 2 du dispositif comprennent au moins une seconde patte 14 qui est prévue au voisinage de l'emplacement de fixation de la seconde extrémité du lien 10 souple sur l'élément d'habillement 3b respectif et qui est écartée au-dessus de la susdite première patte 4 d'une distance correspondant sensiblement à la hauteur du terminal d'information visuelle 1. Cette seconde patte 14 est propre à être solidarisée, par des moyens d'attache rapide tels que ceux précités, à la partie supérieure dudit terminal d'information visuelle 1 de manière telle que celui-ci, n'ayant pas à être utilisé, puisse être retenu en position relevée contre la poitrine de l'utilisateur comme montré à la figure 1B (position de non utilisation). La seconde patte 14 peut être fixée à l'élément d'habillement 3b par des moyens d'attache rapide comme ceux précités ou bien être cousue sur l'élément d'habillement 3b.

Les moyens proposés par l'invention sont remarquables par les avantages importants qu'ils confèrent, notamment pour la simplicité et le faible coût des matériels mis en oeuvre, la simplicité de manipulation entre les positions d'utilisation et de non utilisation du terminal, la faculté d'installation et de désinstallation très simples et très rapides si l'utilisateur souhaite ne pas porter le terminal en permanence, et enfin la très grande robustesse des moyens de support inhérents à la souplesse des organes constitutifs.

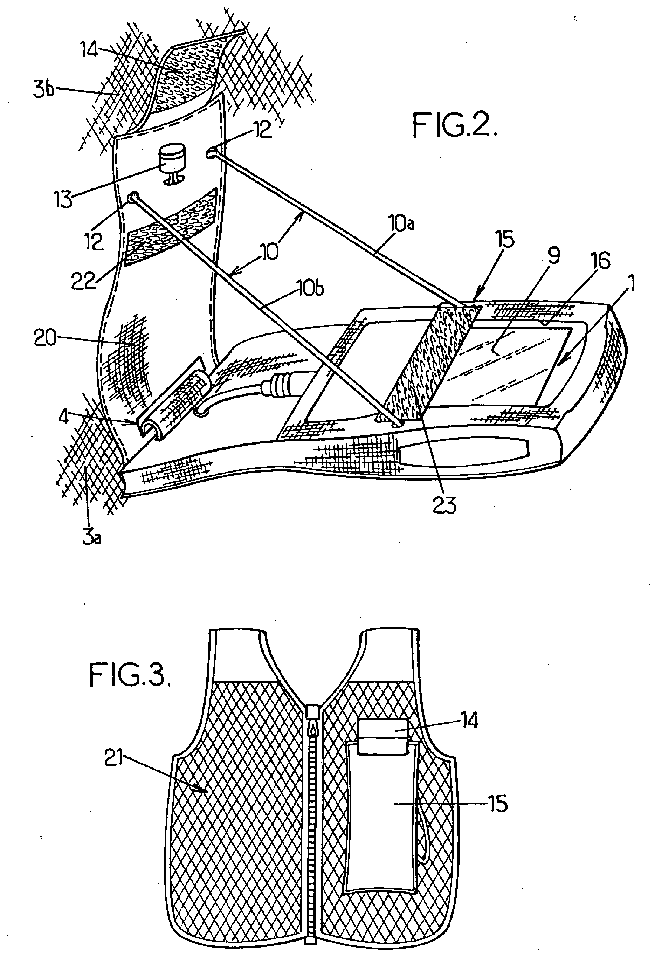

On notera également l'avantage inhérent à l'absence d'élément rigide dans les moyens de support, qui réside dans le fait que, si l'utilisateur vient à être brusquement plaqué contre une paroi dure -mur, sol- alors que le terminal est abaissé en position d'utilisation, le terminal est, au cours de ce mouvement, relevé contre la poitrine de l'utilisateur sans déformation ou rupture d'organe. On peut du reste avantageusement prévoir des moyens de retenue rapide propres à maintenir le terminal en position relevée de façon automatique, sans intervention de l'utilisateur, et un exemple concret en sera donné ci-après en regard de la figure 2.

A la figure 2 est illustré un mode de réalisation préféré du dispositif de l'invention qui est montré en position d'utilisation, le terminal 1 étant abaissé selon une représentation analogue à celle de la figure 1A.

Le terminal d'information visuelle 1 est solidaire d'une housse 15, dans laquelle il est partiellement ou totalement enfermé. Cette housse 15 est en un matériau souple, notamment en tissu épais comme représenté, et comporte une fenêtre 16 à travers laquelle apparaît l'écran 9 du terminal 1.

Le lien 10 souple est alors solidarisé à cette housse 15 dans la partie supérieure ou au voisinage de la partie supérieure de celle-ci.

Egalement, la seconde patte 14 est solidarisable à cette housse 15 à la partie supérieure de celle-ci.

Pour que le terminal 1 soit retenu de façon stable en position abaissée pour son utilisation, il est préférable que le lien 10 souple soit double et à cet effet comprenne deux brins 10a, 10b solidarisés au terminal d'information visuelle 1 de chaque côté de celui-ci ; dans la représentation qui en est faite à la figure 2, les deux brins 10a, 10b sont solidarisés à la housse 15 de chaque côté de celle-ci. Il peut s'agir de deux brins indépendants l'un de l'autre, ce qui procure une sécurité en cas de rupture de l'un d'eux, ou bien de deux brins appartenant à un lien unique tel qu'un lacet traversant la housse 15 comme montré à la figure 2.

Toujours de façon préférée, le lien 10 souple est muni de moyens de réglage en longueur. Un tel réglage peut certes être obtenu en faisant un noeud de retenue en un emplacement approprié le long du lien 10 ; toutefois, une solution mieux adaptée et propre à permettre un réglage plus rapide consiste à prévoir un organe de réglage blocable en un emplacement quelconque le long du lien 10 ; un tel organe peut être constitué, d'une façon en soi connue, par l'olive 13 précitée (aussi connue sous le nom de "tanka") disposée du côté de la seconde extrémité du lien 10 et équipée d'une pince d'accrochage sur le lien 10. Dans le cas du lien à deux brins illustré à la figure 2, les extrémités des deux brins 10a, 10b sont engagées dans l'olive 13.

Le dispositif conforme à l'invention laisse toute liberté quant à la constitution du terminal 1, à la condition que celui-ci satisfasse structurellement aux conditions exposées plus haut pour son observation par l'utilisateur. Dans le cas où la partie utile du terminal 1 est de dimensions restreintes (par exemple l'écran 9 seul), la mise en oeuvre du bras 6 précité immédiatement à la base de cette partie utile conduirait à la rapprocher par trop du buste de l'utilisateur, ce qui obligerait celui-ci à incliner la tête pour observer l'écran 9. Pour écarter cet inconvénient, on prévoit, comme montré à la figure 1A et à la figure 4A, que le terminal d'information visuelle 1 comprend un boîtier 8 dans lequel le bras transversal est écarté par des moyens rigides d'entretoisement 17 (par exemple en forme de cadre). Toutefois cette disposition n'est pas toujours nécessaire. A titre d'exemple, on a montré à la figure 4B un terminal 1 équipé, outre de l'écran 9 principal précité, également d'un second écran 18 et d'un clavier à touches 19 qui se superposent sur toute la hauteur du terminal 1 : avec un terminal ainsi agencé, l'écran 9 qui seul doit être observé dans les conditions mentionnées, est correctement disposé par rapport aux yeux de l'utilisateur et le bras 6 peut être prévu à la base même de la partie utile du terminal, sans moyens additionnels d'entretoisement.

Des dispositions additionnelles peuvent avantageusement être mises en oeuvre et, par souci de simplification, sont illustrées à la figure 2 conjointement avec celles exposées ci-dessus bien que leur combinaison ne s'impose pas même si une telle combinaison est intéressante en pratique. Dans ce contexte, on prévoit que le dispositif comporte une embase 20 souple, notamment sous forme d'une bande de tissu épais (par exemple le même que celui constitutif de la housse). Cette embase 20 peut être munie de moyens d'attache rapide, tels que ceux mentionnés plus haut, propres à autoriser sa fixation amovible sur au moins un élément d'habillement 3a, 3b de l'utilisateur, ou bien elle peut être cousue sur l'élément d'habillement. Les première et seconde pattes 4, 14 sont solidarisées (attache rapide, cousues) à cette embase 20. De plus, la seconde extrémité du lien 10 souple est solidaire de cette embase 20, les oeillets 12 étant prévus sur celle-ci et l'olive de réglage soit apparaissant à travers un oeillet comme montré à la figure 2, soit apparaissant derrière et au-dessus de celle-ci.

Pour simplifier la constitution du dispositif, il est avantageux que l'embase 20 soit solidaire de la housse 15 et qu'elle constitue un rabat de celle-ci propre à former un couvercle fermant la housse et protégeant le terminal 1 lorsque l'utilisateur démonte le dispositif de son habillement.

On peut aussi prévoir des moyens d'attache rapide sous forme de rubans auto-agrippants respectivement en 22 sur l'élément d'habillement 3a ou l'embase 20 et en 23 sur le terminal 1 ou sa housse 15 de manière que le terminal 1 puisse être retenu en position relevée ou escamotée de façon automatique, sans intervention de l'utilisateur, par exemple lorsque ce dernier vient à être plaqué contre un obstacle.

D'après les explications qui précèdent, on comprend que le dispositif conforme à l'invention laisse une très grande souplesse pour sa mise en oeuvre. Ainsi, on peut concevoir que les deux pattes 4 et 14 puissent être fixées sur deux éléments d'habillement différents de l'utilisateur et/ou de façon fixe ou amovible, et dans ce dernier cas par l'intermédiaire de tout moyen approprié (de préférence bandes de tissu à micro-crochets, mais aussi éventuellement pinces mécaniques ou autres). Toutefois, il semble que le mode de mise en oeuvre le mieux approprié aux exigences des utilisateurs au moins pour certaines applications consiste en ce que, comme montré à la figure 3, le dispositif soit solidarisé à un élément d'habillement 3 unique (les éléments d'habillement 3a et 3b précités n'étant alors que des emplacements différents sur cet élément d'habilement unique) ; en pratique, on pourra prévoir que l'élément d'habillement 3 porté par l'utilisateur recouvre son buste, s'agissant notamment d'un gilet 21 ou d'une veste comme montré à la figure 3 : le terminal 1 est alors supporté dans une attitude suffisamment stable verticalement pour rester en permanence à une distance de vision correcte par rapport aux yeux de l'utilisateur.

## Revendications

1. Dispositif pour l'information visuelle individuelle d'un utilisateur, ledit dispositif comprenant un terminal portatif (1) d'information visuelle et des moyens de support (2) associés à celui-ci le rendant propre à être supporté par au moins un élément d'habillement (3; 3a, 3b) de l'utilisateur sensiblement au niveau du buste de l'utilisateur,
ce dispositif comprend :
- au moins une première patte (4) qui est propre à être solidaire à l'aide d'un moyen d'attache rapide, dudit élément d'habillement (3; 3a, 3b) sensiblement au niveau du buste de l'utilisateur et qui est solidarisée à la partie inférieure dudit terminal (1) d'information visuelle pour former un pivot d'articulation en rotation autorisant ledit terminal (1) d'information visuelle à pivoter entre deux positions, à savoir une position d'utilisation dans laquelle il est incliné sous le regard et à distance de vision de l'utilisateur et une position de non utilisation dans laquelle il est relevé contre la poitrine de l'utilisateur, et
- au moins une seconde patte (14) qui est prévue sur l'élément d'habillement (3; 3a, 3b) au-dessus de la susdite première patte (4) d'une distance correspondant sensiblement à la hauteur du terminal (1) d'information visuelle, ladite seconde patte (14) étant propre à être solidarisée, par des moyens d'attache rapide, à la partie supérieure dudit terminal (1) d'information visuelle de manière telle que celui-ci soit retenu dans ladite position relevée de non utilisation,
- au moins un lien (10) souple qui possède une extrémité solidarisée (en 11) au terminal (1) d'information visuelle dans la partie supérieure de celui-ci et une autre extrémité fixée à l'élément d'habillement (3; 3a, 3b) au-dessus de la susdite première patte, et
**caractérisé**
- **en ce que** ladite au moins une première patte (4) est refermable sur elle-même en une boucle (5) à l'aide d'un moyen d'attache rapide,
- **en ce que** ledit terminal (1) d'information visuelle est muni inférieurement d'un bras (6) transversal propre à être entouré par ladite première patte (4), ce grâce à quoi ledit bras (6) forme un pivot d'articulation en rotation retenu dans ladite première patte (4) refermée sur elle-même en boucle pour former une douille d'articulation du pivot,
- **en ce que** l'emplacement de positionnement de ladite première patte (4) sur l'élément d'habillement (3; 3a, 3b) et la longueur dudit lien (10) souple déterminent la susdite position inclinée d'utilisation du terminal (1) d'information visuelle.

2. Dispositif selon la revendication 1, **caractérisé**
- **en ce que** le terminal (1) d'information visuelle est solidaire d'une housse (15),
- **en ce que** le lien (10) souple est solidarisé à cette housse (15) dans la partie supérieure de celle-ci, et
- **en ce que** la seconde patte (14) est solidarisable à cette housse (15) à la partie supérieure de celle-ci.

3. Dispositif selon la revendication 1 ou 2, **caractérisé en ce que** le lien (10) souple comprend deux brins (10a, 10b) solidarisés au terminal (1) d'information visuelle de chaque côté de celui-ci.

4. Dispositif selon l'une quelconque des revendications 1 à 3, **caractérisé en ce que** le lien (10) souple est muni de moyens (13) de réglage en longueur.

5. Dispositif selon la revendication 4, **caractérisé en ce que** les moyens (13) de réglage en longueur du lien (10) souple sont disposés du côté de sa susdite seconde extrémité.

6. Dispositif selon l'une quelconque des revendications 1 à 5, **caractérisé en ce que** le lien (10) souple est un lacet.

7. Dispositif selon les revendications 4 à 6, **caractérisé en ce que** les moyens (13) de réglage en longueur comprennent une pince déplaçable le long du lacet.

8. Dispositif selon l'une quelconque des revendications 1 à 7, **caractérisé en ce que** le terminal (1) d'information visuelle comprend un boîtier (8) dans lequel le bras (6) transversal est écarté par des moyens rigides d'entretoisement (17).

9. Dispositif selon l'une quelconque des revendications 1 à 8, **caractérisé**
- **en ce que** ce dispositif comporte une embase (20) souple munie de moyens d'attache rapide propres à autoriser sa fixation sur au moins un élément (3; 3a, 3b) d'habillement de l'utilisateur,
- **en ce que** les première et seconde pattes (4, 14) sont solidarisées à cette embase (20), et
- **en ce que** la susdite seconde extrémité du lien (10) souple est solidaire de cette embase (20).

10. Dispositif selon les revendications 2 et 8, **caractérisé en ce que** l'embase (20) est solidaire de la housse (15) et constitue un rabat de celle-ci propre à former un couvercle.

11. Dispositif selon l'une quelconque des revendications 1 à 10, **caractérisé en ce que** des moyens d'attache rapide (22, 23) sont prévus sur des parties en regard respectivement d'un élément d'habillement (3; 3a) et du terminal (1) d'information visuelle pour maintenir ce dernier automatiquement en position relevée s'il est rabattu contre l'utilisateur.

12. Dispositif selon l'une quelconque des revendications 1 à 11; **caractérisé en ce que** les moyens d'attache rapide sont des rubans à micro-crochets.

13. Dispositif selon l'une quelconque des revendications 1 à 12, **caractérisé en ce que** l'élément (3) d'habillement porté par l'utilisateur recouvre son buste, s'agissant notamment d'un gilet ou d'une veste.

## Claims

1. A device for individual visual information of a user, said device comprising a portable visual information terminal (1) and support means (2) associated therewith and making it suitable for being supported by at least one clothing element (3; 3a, 3b) of the user substantially at the level of the bust of the user,
said device comprises:
- at least one first tab (4) which is adapted to be fixed by means of a rapid attachment means to said clothing element (3; 3a, 3b) substantially at the level of the bust of the user and which is fixed to the lower part of said visual information terminal (1) to form a rotary articulation pivot allowing said visual information terminal (1) to pivot between two positions, namely a use position in which it is inclined below the look and at the viewing distance of the user and a non-use position in which it is raised against the chest of the user, and
- at least one second tab (14) which is provided on the clothing element (3; 3a, 3b) above said first tab (4) by a distance substantially corresponding to the height of the visual information terminal (1), said second tab (14) being adapted to be fixed by rapid attachment means to the upper part of said visual information terminal (1) in such a way that it is retained in said raised non-use position, and
- at least one flexible link (10) which has an end fixed (at 11) to the visual information terminal (1) in the upper part thereof and another end fixed to the clothing element (3; 3a, 3b) above said first tab,
**characterised in that**
- said at least one first tab (4) can be closed on to itself in a loop (5) by means of a rapid attachment means,
- said visual information terminal (1) is provided in a lower portion with a transverse arm (6) adapted to be surrounded by said first tab (4), whereby said arm (6) forms a rotary articulation pivot retained in said first tab (4) which is closed on itself in a loop to form an articulation sleeve of the pivot, and
- the placing at which said first tab (4) is positioned on the clothing element (3; 3a, 3b) and the length of said flexible link (10) determine said inclined position of use of the visual information terminal (1).

2. A device according to claim 1 **characterised in that**
- the visual information terminal (1) is fixed with respect to a cover (15),
- the flexible link (10) is fixed to said cover (15) in the upper part thereof, and
- the second tab (14) can be fixed with respect to said cover (15) in the upper part thereof.

3. A device according to claim 1 or claim 2 **characterised in that** the flexible link (10) comprises two strands (10a, 10b) fixed with respect to the visual information terminal (1) on each side thereof.

4. A device according to any one of claims 1 to 3 **characterised in that** the flexible link (10) is provided with length regulating means (13).

5. A device according to claim 4 **characterised in that** the length regulating means (13) for the flexible link (10) are disposed at the side of its said second end.

6. A device according to any one of claims 1 to 5 **characterised in that** the flexible link (10) is a lace.

7. A device according to claims 4 to 6 **characterised in that** the length regulating means (13) comprise a gripping member displaceable along the lace.

8. A device according to any one of claims 1 to 7 **characterised in that** the visual information terminal (1) comprises a case (8) in which the transverse arm (6) is spaced therefrom by rigid bracing means (17).

9. A device according to any one of claims 1 to 8 **characterised in that**
- said device comprises a flexible base (20) provided with rapid attachment means adapted to permit fixing thereof to at least one clothing element (3; 3a, 3b) of the user,
- the first and second tabs (4, 14) are fixed to said base (20), and
- said second end of the flexible link (10) is fixed with respect to said base (20).

10. A device according to claims 2 and 8 **characterised in that** the base (20) is fixed with respect to the cover (15) and constitutes a flap thereof adapted to form a covering.

11. A device according to any one of claims 1 to 10 **characterised in that** rapid attachment means (22, 23) are provided on mutually facing parts of a clothing element (3; 3a) and the visual information terminal (1) respectively to automatically maintain the latter in the raised position if it is folded back against the user.

12. A device according to any one of claims 1 to 11 **characterised in that** the rapid attachment means are micro-hook strips.

13. A device according to any one of claims 1 to 12 **characterised in that** the clothing element (3) worn by the user covers the bust of the user, involving in particular a waistcoat or a jacket.

## Patentansprüche

1. Vorrichtung zur individuellen visuellen Information eines Benutzers, wobei die besagte Vorrichtung ein tragbares Endgerät (1) zur visuellen Information und mit diesem assoziierte Tragemittel (2) umfasst, die es ermöglichen, dass es durch zumindest ein Bekleidungselement (3; 3a; 3b) des Benutzers im Wesentlichen auf Höhe des Oberkörpers des Benutzers getragen wird, diese Vorrichtung umfasst:
- zumindest eine erste Lasche (4), die geeignet ist, mit Hilfe eines Schnellbefestigungsmittels im Wesentlichen auf Höhe des Oberkörpers des Benutzers mit dem besagten Bekleidungselement (3; 3a; 3b) fest verbunden zu werden, und die mit dem unteren Teil des besagten Endgeräts (1) zur visuellen Information fest verbunden ist, um eine Rotationsgelenkdrehachse zu bilden, die es dem besagten Endgerät (1) zur visuellen Information gestattet, sich zwischen zwei Positionen zu drehen, nämlich einer Benutzungsposition, in der es geneigt im Blick und in einer Sehentfemung des Benutzers ist, und einer Nichtbenutzungsposition, in der es gegen die Brust des Benutzers hochgeklappt ist, und
- zumindest eine zweite Lasche (14), die in einem im Wesentlichen der Höhe des Endgeräts (1) zur visuellen Information entsprechenden Abstand auf dem Bekleidungselement (3; 3a; 3b) oberhalb der oben genannten ersten Lasche (4) vorgesehen ist, wobei die besagte zweite Lasche (14) geeignet ist, durch Schnellbefestigungsmittel mit dem oberen Teil des Endgeräts (1) zur visuellen Information derart fest verbunden zu werden, dass jenes in der besagten hochgeklappten Nichtbenutzungsposition zurückgehalten wird,
- zumindest ein flexibles Band (10), das ein mit dem Endgerät (1) zur visuellen Information in dessen oberem Teil (bei 11) verbundenes Ende und ein oberhalb der oben genannten ersten Lasche an dem Bekleidungselement (3; 3a; 3b) befestigtes anderes Ende besitzt,
**dadurch gekennzeichnet,**
- **dass** die besagte zumindest eine erste Lasche (4) mit sich selbst durch eine Schnalle (5) mit Hilfe eines Schnellbefestigungsmittels wiederverschließbar ist,
- **dass** das besagte Endgerät (1) zur visuellen Information unten mit einem querliegenden Arm (6) versehen ist, der geeignet ist, von der besagten ersten Lasche (4) umschlossen zu werden, wodurch der besagte Arm (6) eine Rotationsgelenkdrehachse bildet, die in der, um eine Gelenkbüchse der Drehachse zu bilden, mit sich selbst durch eine Schnalle verschlossenen ersten Lasche (4) zurückgehalten wird, und
- **dass** der Positionierungsstandort der besagten ersten Lasche (4) auf dem Bekleidungselement (3; 3a; 3b) und die Länge des besagten flexiblen Bandes (10) die oben genannte geneigte Benutzungsposition des Endgeräts (1) zur visuellen Information bestimmen.

2. Vorrichtung nach Anspruch 1, **dadurch gekennzeichnet,**
- **dass** das Endgerät (1) zur visuellen Information fest mit einer Schutzhülle (15) verbunden ist,
- **dass** das flexible Band (10) mit dieser Schutzhülle (15) in deren oberem Teil fest verbunden ist, und
- **dass** die zweite Lasche (14) mit dieser Schutzhülle (15) in deren oberem Teil fest verbindbar ist.

3. Vorrichtung nach Anspruch 1 oder 2, **dadurch gekennzeichnet, dass** das flexible Band (10) zwei Fäden (10a, 10b) umfasst, die mit dem Endgerät (1) zur visuellen Information an dessen jeder Seite fest verbunden ist.

4. Vorrichtung nach einem der Ansprüche 1 bis 3, **dadurch gekennzeichnet, dass** das flexible Band (10) mit Mitteln (13) zur Längeneinstellung versehen ist.

5. Vorrichtung nach Anspruch 4, **dadurch gekennzeichnet, dass** die Mittel (13) zur Längeneinstellung des flexiblen Bandes (10) an der Seite seines oben genannten zweiten Endes angeordnet sind.

6. Vorrichtung nach einem der Ansprüche 1 bis 5, **dadurch gekennzeichnet, dass** das flexible Band (10) ein Schnürriemen ist.

7. Vorrichtung nach den Ansprüchen 4 bis 6, **dadurch gekennzeichnet, dass** die Mittel (13) zur Längeneinstellung eine entlang des Schnürriemens verschiebbare Klemme umfassen.

8. Vorrichtung nach einem der Ansprüche 1 bis 7, **dadurch gekennzeichnet, dass** das Endgerät (1) zur visuellen Information ein Gehäuse (8) umfasst, in dem der querliegende Arm (6) durch feste Versteifungsmittel (17) zur Seite gerückt wird.

9. Vorrichtung nach einem der Ansprüche 1 bis 8, **dadurch gekennzeichnet,**
- **dass** diese Vorrichtung ein flexibles Unterteil (20) aufweist, das mit Schnellverbindungsmitteln ausgestattet ist, die geeignet sind, seine Befestigung auf zumindest einem Bekleidungselement (3; 3a; 3b) des Benutzers zu gestatten,
- **dass** die erste und die zweite Lasche (4, 14) fest mit diesem Unterteil (20) verbunden sind, und
- **dass** das oben genannte zweite Ende des flexiblen Bandes (10) fest mit diesem Unterteil (20) verbunden ist.

10. Vorrichtung nach den Ansprüchen 2 und 8, **dadurch gekennzeichnet, dass** das Unterteil (20) fest mit der Schutzhülle (15) verbunden ist und eine Klappe von dieser darstellt, die geeignet ist, einen Deckel zu bilden.

11. Vorrichtung nach einem der Ansprüche 1 bis 10, **dadurch gekennzeichnet, dass** die Schnellbefestigungsmittel (22, 23) auf gegenüberliegenden Teilen jeweils eines Bekleidungselements (3; 3a) und des Endgeräts (1) zur visuellen Information vorgesehen sind, um dieses letzte automatisch in hochgeklappter Position zu halten, wenn es gegen den Benutzer umgelegt ist.

12. Vorrichtung nach einem der Ansprüche 1 bis 11, **dadurch gekennzeichnet, dass** die Schnellbefestigungsmittel Mikro-Klettbänder sind.

13. Vorrichtung nach einem der Ansprüche 1 bis 12, **dadurch gekennzeichnet, dass** das vom Benutzer getragene Bekleidungselement (3) seinen Oberkörper bedeckt, es sich insbesondere um eine Weste oder eine Jacke handelt.
